# EUROPÄISCHE PATENTSCHRIFT

(11) **EP 0 631 919 B1**
(45) Veröffentlichungstag und Bekanntmachung des Hinweises auf die Patenterteilung: **23.10.1996**
(21) Anmeldenummer: 94105594.9
(22) Anmeldetag: 12.04.1994
(51) Int. Cl.: B61F 5/14, F16F 1/04

(54) **Drehgestellfeder sowie Verfahren zur Herstellung einer solchen und Vorrichtung zur Durchführung dieses Verfahrens**
Spring for a bogie and process for producing such a spring and device for carrying out this process
Ressort pour un bogie et procédé de fabrication d'un tel ressort et dispositif de mis en oeuvre du procédé

(30) Priorität: 26.06.1993 DE 4321337
(43) Veröffentlichungstag der Anmeldung: 04.01.1995
(73) Patentinhaber: LANGEN & SONDERMANN GmbH & Co. KG, D-44534 Lünen (DE); Kohl, Jürgen, D-44534 Lünen (DE)
(72) Erfinder: Kohl, Jürgen, D-44534 Lünen (DE)
(74) Vertreter: Patentanwälte Meinke, Dabringhaus und Partner

(56) Entgegenhaltungen:
- DE-A- 2 707 567
- DE-C- 37 754
- US-A- 1 523 225

## Beschreibung

Die Erfindung betrifft eine Drehgestellfeder zur elastischen Verbindung zwischen einem Drehgestell und einem Fahrgestellaufbau eines Schienenfahrzeuges nach dem Oberbegriff des Patentanspruchs 1 sowie ein Verfahren zur Herstellung einer solchen Drehgestellfeder.

Zur elastischen Verbindung des Drehgestells mit dem Fahrgestellaufbau eines Schienenfahrzeuges sind progressive Federelemente bekannt, die sowohl für Teil- als auch für Vollast geeignet sind. Diese bekannten Federelemente weisen zwei ineinander angeordnete Druckfedern unterschiedlicher Länge auf, wobei die äußere längere Feder fest zwischen dem Fahrgestell und dem Aufbau montiert ist, während die innere kürzere Feder nur fest am Fahrgestell und nach oben hin lose angeordnet ist. Während die äußere Feder sowohl bei Leerlauf bzw. Teillast als auch bei Vollast wirksam ist, ist die innere kürzere Feder bei Leerlauf bzw. Teillast frei schwingend und nur bei Vollast in Funktion.

Diese freie Schwingbarkeit der inneren kürzeren Feder bei Leerlauf bzw. Teillast führt zu einer ungewünschten Geräuschentwicklung, die entsprechend das Fahrverhalten bzw. den Fahrkomfort beeinträchtigt. Von wesentlichem weiteren Nachteil bei der bekannten Vorrichtung ist, daß die Montage bzw. Erneuerung der einzelnen Federn sehr aufwendig ist, da jede einzelne Feder einzeln eingebaut und an einem Teller am Fahrgestell bzw. Aufbau befestigt werden muß, wozu entsprechendes Spezialwerkzeug und entsprechend geschultes Personal erforderlich ist.

Eine gattungsgemäße Drehgestellfeder ist aus der US-A-1,523,225 bekannt. Diese Drehgestellfeder ist aus einem Federstab gebildet, der anders als die vorbeschriebenen Drehgestellfedern keine runde Querschnittsform aufweist, sondern nur bereichsweise rund ausgebildet ist, nämlich an zwei gegenüberliegenden Seiten, während die beiden anderen gegenüberliegenden Seiten parallel zueinander, eben ausgebildet sind. Dabei wird zur Bildung der Feder der Federstab so aufgewickelt, daß jeweils die ebenen Seiten in belastetem Zustand der Feder aufeinander zu liegen kommen. Um eine Anpassung der Feder an Teil- und Vollast zu erreichen, sind die beiden Federenden dieser Feder abgeflacht ausgebildet. Die Herstellung einer solchen Feder ist ausgesprochen aufwendig, da nicht ein einfacher runder Federstab eingesetzt werden kann, sondern ein Federstab mit einer aufwendigen Querschnittsform benötigt wird.

Aufgabe der Erfindung ist es deshalb, eine Drehgestellfeder so zu verbessern, daß auch bei Leerlauf bzw. Teillast Geräuschentwicklungen vermieden werden, wobei die Feder leicht montierbar und auswechselbar sein soll und wobei ohne Beeinträchtigung der Funktion und Festigkeit der Feder eine einfache und exakte Herstellbarkeit derselben gewährleistet sein soll.

Diese Aufgabe wird mit einer Drehgestellfeder der eingangs bezeichneten Art erfindungsgemäß dadurch gelöst, daß der Federstab querschnittlich rund ist und die Breite des wenigstens einen ausgewalzten Federendes dem Durchmesser des runden Federstabes entspricht.

Mit der Erfindung wird eine Drehgestellfeder zur Verfügung gestellt, die als einteiliges Bauteil sowohl für den Leerlauf bzw. Teillastbetrieb als auch für den Vollastbetrieb geeignet ist, wobei die dazu erforderliche progressive Federkennlinie durch die Verjüngung des wenigstens einen Federendes durch spanlose Umformung mittels Auswalzen erreicht wird. Dabei wird durch das Auswalzen die Gefügestruktur bzw. der Faserverlauf des Federstabes nicht verändert, so daß die Festigkeitseigenschaften durch die Umformung nicht beeinträchtigt werden, gleichzeitig bleibt der Außendurchmesser der Feder auch in den Endbereichen erhalten, so daß eine unverändert gute Kraftaufnahme im Bereich der Federaufnahmen am Drehgestell bzw. Fahrgestellaufbau gewährleistet ist. Da anders als bei bekannten Anordnungen nur jeweils eine Drehgestellfeder erforderlich ist, ist eine wesentlich einfachere Montage und auch Auswechselbarkeit gegeben, insbesondere kann bereits werksseitig ein aus einer erfindungsgemäßen Drehgestellfeder und beidseitigen Federstäben bestehender Verbundkörper montiert werden, der vor Ort bei der Montage bzw. Auswechslung lediglich ein Einsetzen in die entsprechenden Aufnahmen am Drehgestell bzw. Aufbau erforderlich macht.

Besonders bevorzugt ist vorgesehen, daß beide Enden des Federstabes in der gleichen Richtung flach ausgewalzt sind.

Zur Lösung der Aufgabe sieht die Erfindung auch ein Verfahren zur Herstellung einer vorbeschriebenen Drehgestellfeder vor, welches sich dadurch auszeichnet, daß ein runder Federstab etwa auf Schmiedetemperatur erwärmt, anschließend wenigstens ein Ende desselben derart flach ausgewalzt wird, daß die Breite des ausgewalzten Federendes dem Durchmesser des runden Federstabes entspricht, und daß dann der endseitig ausgewalzte Federstab derart spiralförmig aufgewickelt wird, daß sich die wenigstens eine stirnseitige flachgewalzte Oberfläche quer zur Federlängsrichtung erstreckt.

Mit dieser Verfahrensführung ist es auf einfache Weise möglich, eine derartige Drehgestellfeder mit progressiver Federkennlinie herzustellen, ohne die Festigkeitseigenschaften der Feder zu beeinträchtigen, da durch das Auswalzen die Gefügestruktur des Federstabes erhalten bleibt.

Dabei ist vorteilhaft vorgesehen, daß der Federstab durch wenigstens ein Walzenpaar gezogen wird, wobei beide Walzen nur im flachzudrückenden Bereich des Federstabes mit diesem in Druckkontakt gebracht wird. Dabei kann der Federstab nur mit dem jeweiligen flachzuwalzenden Ende in den Bereich des Walzenpaares gebracht und nur bereichsweise durch die Walzen gezogen werden oder es ist auch möglich, den Federstab mit seiner gesamten Länge durch das Walzenpaar zu ziehen, wobei dann entsprechend die Walzen sich nur zeitweise in Druckkontakt mit dem Federstab befinden.

Um einen Kontraktionseffekt zu erzielen, um eine Breitung des Federstabes zu vermeiden, ist vorteilhaft vorgesehen, daß die Walzen mit einer geringeren Umfangsgeschwindigkeit als die Durchziehgeschwindigkeit des Federstabes angetrieben werden.

Um eine besonders exakte Herstellung zu erreichen, ist vorgesehen, daß die Walzen in Abhängigkeit von der Position und Durchziehgeschwindigkeit des Federstabes rechnergesteuert angetrieben und in die bzw. aus der Walzposition gebracht werden. Dazu wird entsprechend jeweils die Walz- und Federstabposition gemessen und daraus die entsprechende Steuerungsfunktion ermittelt.

Die Erfindung ist nachstehend anhand der Zeichnung beispielsweise näher erläutert. Diese zeigt in:
- Fig. 1: eine Seitenansicht einer erfindungsgemäßen Drehgestellfeder,
- Fig. 2: einen runden, beidseitig ausgewalzten Federstab zur Bildung einer Feder nach Fig. 1 in Seitenansicht,
- Fig. 3: den Federstab nach Fig. 2 in Draufsicht,
- Fig. 4: einen runden Federstab vor der Umformung,
- Fig. 5: einen runden Federstab mit einseitig ausgewalztem Ende in Seitenansicht,
- Fig. 6: eine Draufsicht auf die Ansicht nach Fig. 5,
- Fig. 7: eine Kennlinie einer erfindungsgemäßen Drehgestellfeder und
- Fig. 8: in schematischer Darstellung eine erfindungsgemäße Vorrichtung zur Herstellung einer Drehgestellfeder.

Eine erfindungsgemäße Drehgestellfeder zur elastischen Verbindung zwischen einem nicht dargestellten Drehgestell und einem ebenfalls nicht dargestellten Fahrgestellaufbau eines Schienenfahrzeuges ist in der Zeichnung allgemein mit 1 bezeichnet. Diese Drehgestellfeder 1 ist an ihren beiden Enden zum Einbau zwischen dem Drehgestell und dem Fahrgestellaufbau mit nicht dargestellten Federtellern versehen, d.h. die Federn befinden sich mit ihrem jeweiligen Ende auf einem Aufnahmezapfen des nicht dargestellten Federtellers. Die Drehgestellfeder mit den Federtellern kann dann durch Einsetzen der Federteller in die entsprechenden Aufnahmen am Fahrgestellaufbau bzw. Drehgestell montiert werden.

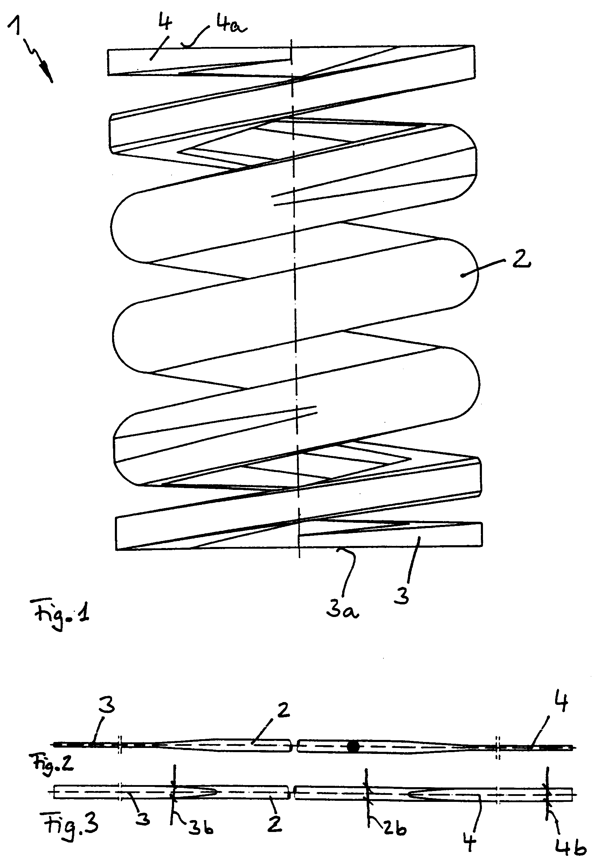

Die als Druckfeder ausgebildete Drehgestellfeder 1 besteht aus einem runden Federstab 2, dessen beide Enden 3 und 4 flach ausgewalzt sind, wie am besten aus den Figuren 2 und 3 zu erkennen ist, in welchem ein Federstab 2 mit zwei ausgewalzten Enden 3,4 dargestellt ist. Dabei sind beide Federenden 3 und 4 in derselben Richtung ausgewalzt, wie deutlich dargestellt ist.

Die Drehgestellfeder 1 wird nach dem flachen Auswalzen der Enden 3 und 4 derart spiralförmig aufgewickelt, daß die Oberflächen 3a bzw. 4a sich quer zur Federlängsrichtung erstrecken, wie dies aus Fig. 1 hervorgeht.

Durch das Auswalzen der Federenden 3 und 4 ist der Federstab 2 in diesen Bereichen verjüngt, ohne daß die Breite 3b, 4b gegenüber dem Federstabdurchmesser 2b zugenommen hat. Es ergibt sich dadurch eine progressive Federkennlinie, so wie dies in Fig. 7 dargestellt ist. Aufgrund dieser Federkennlinie ist die Drehgestellfeder 1 sowohl für Vollast als auch für Leerlauf und Teillast geeignet. Dabei ist der Außenquerschnitt der Feder 1 auch in den Endbereichen erkennbar unverändert gegenüber dem übrigen Bereich, lediglich der Querschnitt des Federstabes in diesen Bereichen ist entsprechend geringer (Fig. 2). Dadurch steht auch im Krafteinleitungsbereich der Federenden eine unverändert große Aufnahmefläche zur Verfügung, gleichzeitig wird durch das Auswalzen der Federenden 3, 4 eine Schwächung des Materials bzw. eine Gefügestörung vermieden.

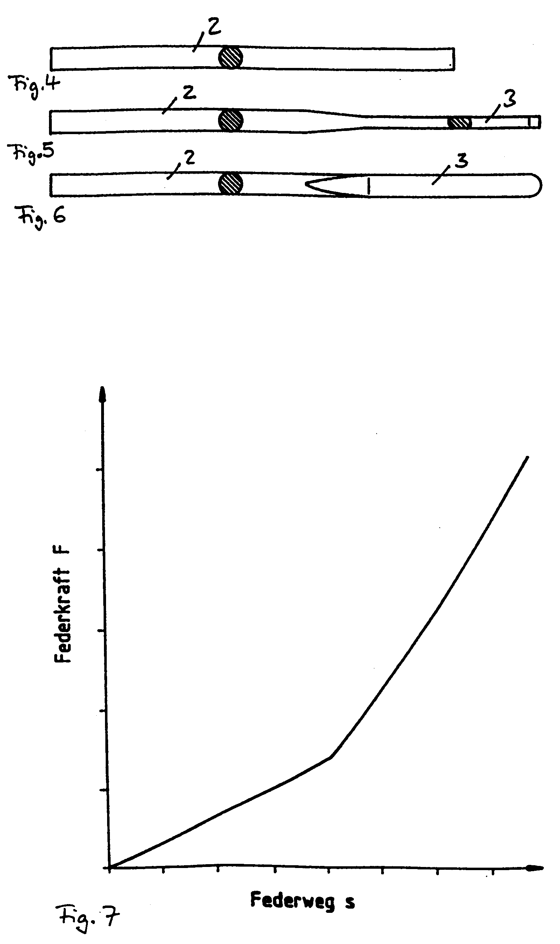

Zur Herstellung der Feder 1 wird ein in Fig. 4 dargestellter Federstab 2 zunächst etwa auf Schmiedetemperatur erwärmt, anschließend werden die beiden Federenden 3 und 4 flach ausgewalzt, wie dies in den Fig. 2 und 3 dargestellt ist. Nachfolgend wird der Federstab 2 dann in der in Fig. 1 dargestellten Weise spiralförmig aufgewickelt, so daß die fertige Drehgestellfeder 1 entsteht. Abschließend können dann die nicht dargestellten Federteller montiert werden.

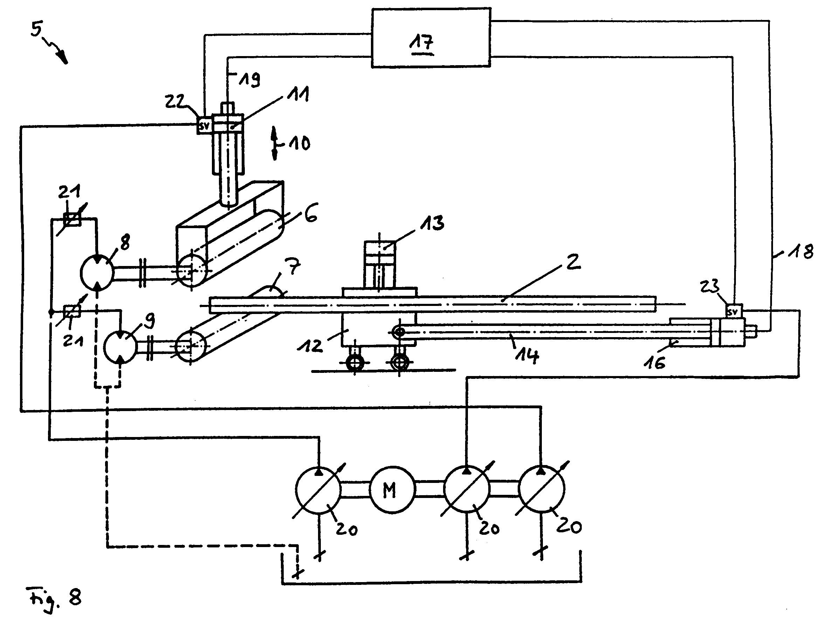

Wie in den Fig. 5 und 6 dargestellt, kann in einer alternativen Ausführungsform auch vorgesehen sein, daß nur eines der beiden Federenden, z.B. das Federende 3, flach ausgewalzt wird.

In Fig. 8 ist eine besonders vorteilhafte Vorrichtung zur Herstellung der erfindungsgemäßen Drehgestellfeder 1 dargestellt und allgemein mit 5 bezeichnet.

Die Vorrichtung 5 weist zunächst ein aus zwei Walzen 6, 7 bestehendes Walzenpaar auf, wobei beide Walzen über Hydraulikmotoren 8, 9 drehend antreibbar sind. Die Walze 7 ist bevorzugt in einem ortsfesten Rahmen angeordnet, während die Walze 6 in Richtung des Doppelpfeiles 10 beweglich ist, und zwar mittels eines Druckzylinders 11.

Zum Durchziehen eines endseitig auszuwalzenden Federstabes 2 ist eine spezielle Einrichtung vorgesehen, die zunächst einen Transportwagen 12 mit einem Spannzylinder 13 aufweist, in welchen der Federstab 2 eingespannt werden kann. Der Transportwagen 12 ist über einen Kolben 14 mit einem Zugzylinder 16 verbunden.

Sowohl der Zugzylinder 16 als auch der Druckzylinder 11 sind mit einem nicht dargestellten integrierten Weggeber als Positionsmeßeinrichtung ausgerüstet, wobei beide Meßeinrichtungen mit einem Rechner 17 verbunden sind, die Verbindung ist mit den Linien 18 bzw. 19 angedeutet.

Zum Antrieb der Zylinder 11 bzw. 16 und der Hydraulikmotoren 8, 9 ist ein Antriebsmotor M vorgesehen, der mit Hydraulikpumpen 20 gekoppelt ist, welche die vorgenannten Aggregate beaufschlagen. Dabei ist eine der Pumpen 20 mit den beiden Hydraulikmotoren 8 bzw. 9 über regelbare Durchflußventile 21 verbunden, eine andere Pumpe 20 beaufschlagt über ein Servoventil 22 den Druckzylinder 11, während eine weitere Pumpe 20 über ein Servoventil 23 den Zugzylinder 16 beaufschlagt.

Zum Auswalzen der Federenden bzw. der Enden des Federstabes 2 wird zunächst der Federstab 2 auf dem Transportwagen 12 mit Spannzylinder 13 eingespannt und in der gezeigten Weise gegenüber dem geöffneten Walzenpaar 6, 7 ausgerichtet. Anschließend wird gesteuert vom Rechner 17 der Antrieb der Hydraulikmotoren 8, 9 sowie der Zylinder 16 über die Ventile 22, 23, 21 gestartet, wobei gleichzeitig über die integrierten Weggeber der Zylinder 11 bzw. 16 die Position der Transporteinrichtung sowie der Walze 6 bestimmt wird.

Um einen Kontraktionseffekt zu erzielen, ist die lineare Durchziehbewegung des Federstabes 2 bevorzugt größer als die Umfangsgeschwindigkeit der Walzen 6, 7, wobei die Abstirnung der Geschwindigkeiten jeweils von den eingesetzten Materialien und Federstabdurchmessern abhängig ist. Gleichermaßen ist auch die Erwärmung auf Schmiedetemperatur entsprechend materialabhängig.

Natürlich ist die Erfindung nicht auf die dargestellten Ausführungsbeispiele beschränkt. Weitere Ausgestaltungen der Erfindung sind möglich, ohne den Grundgedanken gemäß den unabhängigen Ansprüchen zu verlassen.

## Patentansprüche

1. Drehgestellfeder zur elastischen Verbindung zwischen einem Drehgestell und einem Fahrgestellaufbau eines Schienenfahrzeuges aus einem Federstab (2) mit wenigstens einem flach ausgewalzten Ende (3,4), wobei der ausgewalzte Federstab spiralförmig derart gewickelt ist, daß sich die flachgewalzte stirnseitige Oberfläche (3a,4a) quer zur Federlängsrichtung erstreckt,
dadurch gekennzeichnet,
daß der Federstab (2) querschnittlich rund ist und die Breite (3b,4b) des wenigstens einen ausgewalzten Federendes (3,4) dem Durchmesser (2b) des runden Federstabes (2) entspricht.

2. Drehgestellfeder nach Anspruch 1,
dadurch gekennzeichnet,
daß beide Enden (3,4) des Federstabes (2) in der gleichen Richtung flach ausgewalzt sind.

3. Verfahren zur Herstellung einer Drehgestellfeder nach Anspruch 1 oder 2,
dadurch gekennzeichnet,
daß ein runder Federstab etwa auf Schmiedetemperatur erwärmt, anschließend wenigstens ein Ende desselben derart flach ausgewalzt wird, daß die Breite des ausgewalzten Federendes dem Durchmesser des runden Federstabes entspricht, und daß dann der endseitig ausgewalzte Federstab derart spiralförmig aufgewickelt wird, daß sich die wenigstens eine stirnseitige flachgewalzte Oberfläche quer zur Federlängsrichtung erstreckt.

4. Verfahren nach Anspruch 3,
dadurch gekennzeichnet,
daß der Federstab durch wenigstens ein Walzenpaar gezogen wird, wobei beide Walzen nur im flachzudrückenden Bereich des Federstabes mit diesem in Druckkontakt gebracht wird.

5. Verfahren nach Anspruch 3 oder 4,
dadurch gekennzeichnet,
daß die Walzen mit einer geringeren Umfangsgeschwindigkeit als die Durchziehgeschwindigkeit des Federstabes angetrieben werden.

6. Verfahren nach Anspruch 3, 4 oder 5,
dadurch gekennzeichnet,
daß die Walzen in Abhängigkeit von der Position und Durchziehgeschwindigkeit des Federstabes rechnergesteuert angetrieben und in die bzw. aus der Walzposition gebracht werden.

## Claims

1. A bogie spring for the resilient connection between a bogie and a chassis structure of a rail vehicle comprising a spring bar (2) with at least one end (3, 4) which is rolled out flat, wherein the rolled-out sprig bar is wound in a helical configuration in such a way that the flat-rolled end surface (3a, 4a) extends transversely to the longitudinal direction of the spring, characterised in that the spring bar (2) is of round cross-section and the width (3b, 4b) of the at least one rolled-out spring end (3, 4) corresponds to the diameter (2b) of the round spring bar (2).

2. A bogie spring according to claim 1 characterised in that both ends (3, 4) of the spring bar (2) are rolled-out flat in the same direction.

3. A process for producing a bogie spring according to claim 1 or claim 2 characterized in that a round spring bar is heated approximately to forging temperature, then at least one end thereof is rolled out flat in such a way that the width of the rolled-out end of the spring corresponds to the diameter of the round spring bar, and that the spring bar which has been rolled out at the end is then wound in a helical configuration in such a way that the at least one end flat-rolled surface extends transversely to the longitudinal direction of the spring.

4. A process according to claim 3 characterised in that the spring bar is drawn through at least one pair of rollers, wherein the two rollers are brought into pressure contact with the spring bar only in the region thereof which is to be pressed flat.

5. A process according to claim 3 or claim 4 characterized in that the rollers are driven at a lower peripheral speed than the speed at which the spring bar is pulled therethrough.

6. A process according to claim 3, claim 4 or claim 5 characterised in that the rollers are driven and moved into and out of the rolling position under computer control in dependence on the position of the spring bar and the speed at which it is pulled therethrough.

## Revendications

1. Ressort de bogie servant à établir la liaison élastique entre un bogie et une superstructure du châssis d'un véhicule sur rails, et constitué par une tige (2) comportant au moins une extrémité laminée plate (3,4), la tige laminée du ressort étant enroulée sous forme hélicoïdale de telle sorte que la surface frontale laminée à plat (3a,4a) s'étend transversalement par rapport à la direction longitudinale du ressort,
caractérisé en ce
que la tige (2) du ressort possède une section transversale circulaire et que la largeur (3b,4b) d'au moins une extrémité laminée (3,4) du ressort correspond au diamètre (2b) de la tige cylindrique (2) du ressort.

2. Ressort de bogie selon la revendication 1, caractérisé en ce
que les deux extrémités (3,4) de la tige (2) du ressort sont laminées à plat dans la même direction.

3. Procédé pour fabriquer un ressort de bogie selon la revendication 1 ou 2,
caractérisé en ce
qu'on chauffe une tige cylindrique du ressort approximativement à la température de forgeage, qu'ensuite on lamine à plat au moins une extrémité de cette tige de telle sorte que la largeur de l'extrémité laminée du ressort correspond au diamètre de la tige du ressort et qu'ensuite on enroule sous forme hélicoïdale la tige du ressort laminée à ses deux extrémités de telle sorte qu'au moins une surface frontale laminée à plat s'étend transversalement par rapport à la direction longitudinale du ressort.

4. Procédé selon la revendication 3,
caractérisé en ce qu'on tire la tige du ressort dans au moins un couple de cylindres, les deux cylindres étant placés en contact sous pression avec la tige du ressort, uniquement dans la zone devant être aplatie sous pression.

5. Procédé selon la revendication 3 ou 4,
caractérisé en ce
que les cylindres sont entraînés avec une vitesse circonférentielle inférieure à la vitesse de tirage de la tige du ressort.

6. Procédé selon la revendication 3, 4 ou 5, caractérisé en ce
que les cylindres sont entraînés et sont amenés dans la position de laminage ou en sont écartés d'une manière commandée par ordinateur, en fonction de la position et de la vitesse de tirage de la tige du ressort.
